(19) **Europäisches Patentamt European Patent Office Office européen des brevets**

(11) **EP 3 100 331 B1**

(12) **EUROPEAN PATENT SPECIFICATION**

(45) Date of publication and mention of the grant of the patent:
**01.05.2019 Bulletin 2019/18**

(51) Int Cl.:
*H02J 3/36* (2006.01)  *H02J 3/38* (2006.01)
*H02J 1/10* (2006.01)

(21) Application number: **14714614.6**

(22) Date of filing: **18.03.2014**

(86) International application number:
**PCT/EP2014/055412**

(87) International publication number:
**WO 2015/139738 (24.09.2015 Gazette 2015/38)**

(54) **VOLTAGE REGULATION IN MULTI-TERMINAL HVDC NETWORK**

VERFAHREN ZUR REGELUNG DER SPANNUNG IN EINEM HVDC NETZ

PROCÉDÉ DE RÉGLAGE DE TENSION DANS UN RÉSEAU DE COURANT CONTINU À HAUTE TENSION (HVDC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2016 Bulletin 2016/49**

(73) Proprietor: **Siemens Aktiengesellschaft 80333 München (DE)**

(72) Inventors:
• **DÖRING, David 91058 Erlangen (DE)**
• **EBNER, Günter 91239 Henfenfeld (DE)**
• **SCHUSTER, Dominik 91456 Diespeck (DE)**
• **WÜRFLINGER, Klaus 90419 Nürnberg (DE)**
• **ZELLER, Marcus 91056 Erlangen (DE)**

(56) References cited:
**EP-A1- 2 495 864    WO-A1-2012/000548
WO-A1-2013/131782**

**Description**

The present invention relates to a method for regulating voltage in a multi-terminal HVDC network system and more particularly to a method for handling over-voltages and under-voltages in a multi-terminal HVDC network managed independently by converter stations of the HVDC network.

Currently, HVDC lines are widely used to move power across huge distances between grids. Current developments in the field of HVDC technology are based on DC grids with more than two converter stations, which can operate in both rectifier mode and inverter mode. These networks are known as Multi-terminal HVDC networks. Although the load flow regulation is implemented at station level (i.e. each converter operates in either voltage, power or droop control), it is usually envisaged that such networks are optimized through a higher-order DC Grid Master Controller. As this device is considered to be a global controller instance, communication between all connected terminals and the master controller is a prerequisite.

However, it is necessary to guarantee a highly reliable operation of the converter stations even when the communication between the master controller and the connected terminal fails.

This is usually done with the help of the measured DC voltage as an indicator of excessive or insufficient power fed into the grid. Consequently, the DC voltage varies within a pre-defined voltage band. This is a disadvantage to the extent that the voltage band has to be designed with respect to the worst case scenario, assuming that any voltage values within this band may be present constantly. However, in reality the voltage may fluctuate significantly within this voltage band. In order not to exceed the permitted design values, such as maximum cable voltage, this has to be taken into consideration in the design itself such that the mean voltage should be reduced accordingly.

However, the system voltage should also be maintained within stable limits even during an emergency, in order to guarantee an uninterrupted and continuous operation. Hence, a definite reaction of the system to extraordinary events, such as failure of a wind park, blocking of a converter etc., directly at converter station level and without relying on external communication is extremely important for the overall network operations.

The problem of inadmissibly high or low voltages does not occur in a similar way in HVDC point-to-point (P2P) connections, because for a fixed power flow direction the functions of the stations, that is, either rectifier mode or inverter mode, are assigned in a fixed manner. There is no need for a centralized controller or regulator because the rectifier is usually operated in a voltage control mode, since the maximum DC voltage occurs at its terminals. In case of an outage of the rectifier, the inverter will always lead to a lowering of the voltage, such that no excess voltage will remain.

However, this method cannot be applied to multi-terminal systems, since several rectifiers but only one dedicated voltage controller could be present in the system. Therefore, there exists a need to have a communication-free, reliable handling of excess or over voltages and under voltages in the system, managed autonomously by the individual converter stations.

Published application US 20120092904 A1 discloses a method for controlling multi-terminal HVDC systems having a plurality of converter stations. The method involves receiving a plurality of measurements from a plurality of measurement units disposed on the HVDC system, identifying from the measurements a disruption within the HVDC system, monitoring the measurements to identify a steady-state disrupted condition for the HVDC system, calculating a new set point for at least one of the plurality of converter stations, which new set point may be based on the steady-state disrupted condition and the measurements, and transmitting the new set point to the at least one of the plurality of converter stations.

The method disclosed above relies on measurement units disposed on the HVDC system for identifying a disruption within the HVDC system. However it does not provide for a reliable and communication-free method of voltage regulation in the event of an emergency when the converter stations are unable to communicate.

The WO 2012/000548 A1 describes a control method for converters in a multi terminal DC grid comprising a central master control unit which cooperates the operation of the entire DC transmission system. According to the method described therein, a converter station in power control mode has a power droop characteristics, when the system is outside a defined voltage range for normal operation.

Another method for control of a converter station within a multi terminal DC grid is known from the EP 2 495 864 A1.

It is an object of the present invention to provide for a reliable handling of over voltages and under voltages in a multi-terminal HVDC network system which works at the converter station level without communicating with any central voltage control unit or external voltage measurement unit.

The object of the invention is achieved with a method for regulating voltage in a multi-terminal HVDC network comprising one or more converter stations, wherein the method comprises a step of measuring a local DC voltage at each participating converter station, a step of detecting an over-voltage condition when the measured DC voltage crosses a pre-defined upper threshold voltage or detecting an under-voltage condition when the measured DC voltage crosses a predefined lower threshold voltage, a step of triggering modification of an available DC power set value recorded at the participating converter station by the said converter station on detection of the over-voltage or the under-voltage condition, wherein the DC power set value is modified by a defined power ramp of defined steepness (Mega Watts per second) in case of extraordinary operating states.

The available DC power set value is either previously calculated or obtained from load flow coordination, e.g. through a master controller, depending on a control mode, e.g. voltage, power or droop control modes. With the disclosed invention this DC power set value is modified to bring the system out of the extraordinary state back to a stable and normal operating state.

The extraordinary operating state, i.e. the over-voltage condition, described above manifests itself in the form of an increase in the system voltage above the stable or normal limit for continuous operations. The over-voltage condition occurs, for example, due to an outage of a converter working in inverter mode.

Similarly the other extraordinary operating state, i.e. the under-voltage condition, described above manifests itself in the form of a decrease in the system voltage below the stable or normal limit for continuous operations. The under-voltage condition occurs, for example, due to an outage of a converter station importing power to the HVDC network, e.g. wind park.

The invention described here uses the local DC voltage measured at the converter station for activating or triggering measures at the converter station that provide an automatic return of the system voltage to the stable or normal state.

Since the shift in the voltage away from the normal state in the system is caused by a power flow that is no longer balanced, the method disclosed here envisages a modification of the power set values. Such a modification is applied by each of the converter stations participating in this emergency voltage regulation in an autonomous manner, i.e. without consulting with a central DC grid master controller. The core principle of this invention lies in modification of the present power set values using previous power set values and time duration of modification which restores the power balance in the system once again. In turn, the DC voltage is brought back to the permitted operating range under stationary conditions, thereby avoiding excessive cable voltages that last for inadmissibly long periods of time. This way the voltage regulation can take place in an iterative way.

The modification of the DC power set value is stopped whenever the triggering over-voltage or under-voltage condition is left, i.e. the present power set value is then frozen.

In one embodiment of the invention, the method comprises a step of prioritizing each of the participating converter stations based on a predefined voltage severeness level and an allowable duration of the over-voltage condition or the under-voltage condition. In case of multi-terminal HVDC systems, a staggering in the trigger levels and permitted durations of the voltage control mechanism for the participating converter stations can be used to prioritize the converter stations depending on their function or importance in the transmission task and their actual capability, which generally depends on the current power flow. For example, stations with a short time for the allowed duration for a certain excess or over-voltage level will react first, while other stations having a longer duration will only join and activate their voltage control mechanism if the voltage level could not be sufficiently reduced by the first converter station until then. This way the voltage control mechanism efficiently puts into function only those converter stations which are absolutely needed for voltage regulation without involving the other converter stations of the network.

In another embodiment the method comprises a step of providing at least one multi-stage and staggered voltage detector. In order to be robust and immune to short-term deviations in the DC voltage during dynamic situations, multi-stage and staggered excess or over-voltage and under-voltage detectors are established. These detectors are used for discounting short-term deviations of the measured DC voltage from a normal voltage condition.

The over-voltage or under-voltage detection for each converter station in the HVDC grid may be realized with different levels of severeness, e.g. 1.1 pu, 1.2 pu, 1.3 pu etc. in case of excess voltage; and permitted durations, i.e. ranging from very short time for severe excess to longer times for less severe excess. This is to ensure that these detectors can be tuned such that dynamic effects during normal operating conditions are not accounted for the voltage control mechanism. Also, the configuration of these levels or the duration triggering the voltage control generally differs from other standard detectors that impose converter and grid protection measures that lead to a switching off of the electrical equipment.

In addition to this, and depending on the general power flow characteristics of the DC grid, it is moreover useful to provide such an emergency voltage regulation in a distributed manner for several stations in the DC grid, for which different voltage levels and over-voltage and under-voltage durations for the voltage values could be pre-defined for different situations. In this way, it is possible to prioritize the stations, for instance, so as to delay the reduction of the power of an important inverter exporting power to its AC grid as long as possible.

In yet another embodiment of the method the modification of the DC power set value is specified by a constant and predefined parameter. An example modification scheme can be shown as:

$$\text{OV: } P_{set}(t) = P_{set}(t0) + \Delta P * (t - t0)$$

$$UV: \text{Pset}(t) = \text{Pset}(t0) - \Delta P * (t - t0)$$

Here OV represents the power set value modification scheme for over-voltage condition and UV represents the power set value modification scheme for under-voltage condition. Pset(t) is the modified power set value at each time instant t, while Pset(t0) is the power set value at the starting point t0 of the modification (i.e. when the OV or UV condition is detected). ΔP specifies the rate of power adjustment in Mega Watts per seconds (MW/s).

Negative power set values correspond to import into the DC grid, whereas positive values denote power export from the grid. Therefore, this scheme involves reduction in imported power or increase in exported power for over-voltage condition as well as increase in imported or reduction in exported power for under-voltage condition.

The above scheme is only given as an example, and the disclosed invention also envisages any other scheme of modification of power set value, i.e. according to any different formulae, that can be applied at the converter station level which is based on local voltage detectors only.

The triggered set value modification remains active as long as the OV or UV condition persists. On the other hand, if the previously found condition is left, i.e. the measured DC voltage has returned to within the predefined limits, the modification is stopped. The power set value is then kept at the most recent value Pset(t1), where t1 denotes the end point of the extraordinary condition.

Although the power set value modification is linear according to the above scheme, an even faster return of the DC voltage to safe limits is possible if several converter stations are simultaneously active. In addition to this, even non-linear or situation-dependent power set value modifications are possible.

The method described above is characterized by a high level of robustness and flexibility. This is possible, on the one hand, through the autonomous reaction of the individual converter stations using only the measured DC voltage, so that this method can work successfully even in the event of serious communication failures with any central DC grid master controller. On the other hand, the free choice of different voltage levels and permitted durations allows to define a reaction pattern that can be adjusted for the most likely scenarios and/or a desired prioritization of the power flow.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.

FIG.1 is a schematic diagram showing a multi-terminal HVDC network comprising several converter stations and a central DC grid master controller.

FIG.2 is a schematic diagram showing a multi-terminal HVDC network comprising several converter stations when the DC grid master controller is not in communication with the converter stations.

FIG.3 is a graph depicting an example of a staggered voltage profile.

FIG.4 is a flowchart depicting the method for regulating voltage in a multi-terminal HVDC network comprising several converter stations.

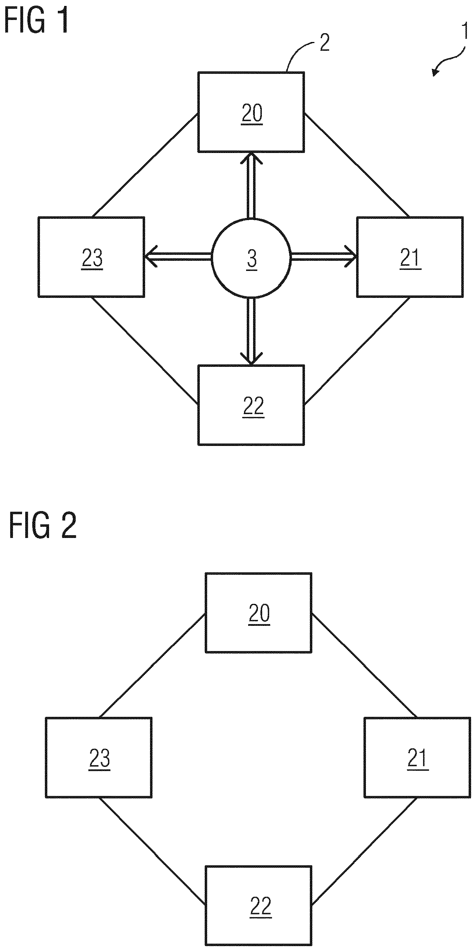

FIG.1 is a schematic diagram of an exemplary multi-terminal HVDC network system 1 comprising several converter stations 2 and a DC grid master controller 3. Each converter station 20, 21, 22, 23 is communicating with a central DC grid master controller 3. The voltages of the converter stations 2 are managed and coordinated by this central controller 3.

FIG.2 is a schematic diagram showing a multi-terminal HVDC network system 1 comprising several converter stations 2 when the DC grid master controller 3 is not in communication with the converter stations 2. This may happen during any emergency situation. However, even during such an emergency condition the system voltage is maintained within stable limits using the method 100 described here in order to guarantee for an uninterrupted, continuous operation. The disclosed method 100 provides for a communication-free, reliable handling of over-voltages and under-voltages in the system 1, managed independently by the individual converter stations 2. The converter stations 2 activate the power set value modification process on detecting an over-voltage or an under-voltage condition. Hence, the actual regulation is implemented at the converter station level.

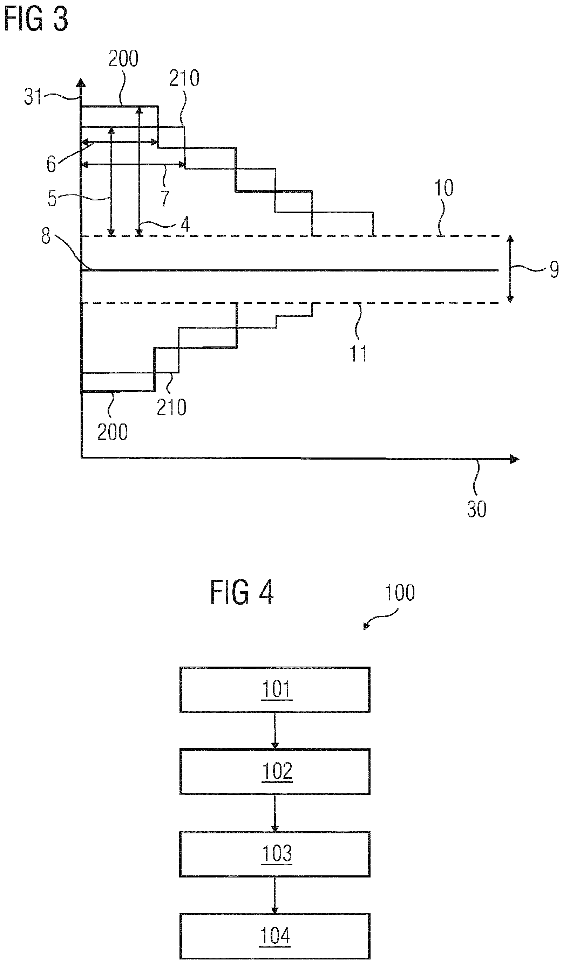

FIG.3 shows a graph depicting an example of a staggered voltage profile with time 't' 30 on x-axis and voltage 'V' 31 in kV on y-axis. In Figure 3, different curves 200, 210 are shown for two converter stations 20, 21 to facilitate understanding. Curve 200 represents voltage-time curve for converter station 20 and curve 210 represents voltage-time curve for converter station 21. It can be seen that the curves 200, 210 of the two converter stations 20, 21 follow both slightly modified voltage levels, such as VOV.20 4 and VOV.21 5, as well as different permitted durations, TOV.20 6 and TOV.21 7. To achieve a reliable operation and coordinated definition of the threshold values, it should be noted that the considered voltage levels should be compensated by the cable losses and hence equalized to a common DC voltage reference, Vref 8. The voltage band for normal operation of the system is shown by Vband 9. The predefined upper threshold voltage 10 and the predefined lower threshold voltage 11 form the upper and the lower limits of the Vband 9.

FIG.4 is a flowchart depicting the method 100 for regulating voltage in a multi-terminal HVDC network system 1 comprising at least one participating converter station 2. The flowchart displays the actions that are carried out in every time step and at every converter station participating in the proposed method 100. The method 100 comprises a first step 101 of measuring a local DC voltage at the participating converter station 20. The method further comprises a second step 102 of detecting an over-voltage condition when the measured DC voltage crosses a predefined upper threshold voltage 10 or detecting an under-voltage condition when the measured DC voltage crosses a predefined lower threshold voltage 11. On detection of the over-voltage or the under-voltage condition a step 103 of triggering modification of an available DC power set value is executed by the said converter station 20. The step 103 of triggering modification envisages modification of the DC power set value by changing it according to a previously defined rate of speed (in Mega Watts per second) and temporal distance to the detection of the extraordinary condition, at time instant t0. And the method finally comprises a step 104 of checking for termination of the modification step 103 when the over-voltage condition or the under-voltage condition no longer persists.

Although the invention has been described with reference to specific embodiments, this description is not meant to be construed in a limiting sense. The scope of protection is defined by the appended claim.

## Claims

1. A method (100) for regulating voltage in a multi-terminal HVDC network system (1) comprising at least one participating converter station (2),
   the method (100) comprising:

   - a step (101) of measuring a local DC voltage at the participating converter station (20);
   - a step (102) of detecting an over-voltage condition when the local DC voltage crosses a predefined upper threshold voltage or detecting an under-voltage condition when the local DC voltage crosses a predefined lower threshold voltage;
   - a step (103) of triggering modification of an available DC power set value by the said converter station (10) on detection of the over-voltage or the under-voltage condition,
   wherein the DC power set value is modified in an autonomous manner, i.e. without consulting with a central DC grid master controller, based on a defined power ramp of defined steepness; wherein the modification of the power set value is perfomed using previous power set values and time duration of modification, i.e. according to a previously defined rate of speed (in Mega Watts per second) and temporal distance to said detection;
   - a step (104) of checking for termination of the modification step (103) when the over-voltage condition or the under-voltage condition no longer persists.

2. The method (100) according to claim 1, wherein the modification of the DC power set value is specified by a constant and predefined parameter.

## Patentansprüche

1. Verfahren (100) zur Regelung von Spannung in einem Multiterminal-HGÜ-Netzwerksystem (1), das mindestens eine teilnehmende Stromrichterstation (2) umfasst,
   wobei das Verfahren (100) Folgendes umfasst:

   - einen Schritt (101) des Messens einer lokalen DC-Spannung an der teilnehmenden Stromrichterstation (20);
   - einen Schritt (102) des Detektierens einer Überspannungsbedingung, wenn die lokale DC-Spannung eine vordefinierte obere Schwellenspannung überschreitet, oder des Detektierens einer Unterspannungsbedingung, wenn die lokale DC-Spannung eine vordefinierte untere Schwellenspannung unterschreitet;
   - einen Schritt (103) des Auslösens einer Modifikation eines verfügbaren DC-Leistungssollwertes durch die Stromrichterstation (10) bei der Detektion der Überspannungs- oder der Unterspannungsbedingung,
   wobei der DC-Leistungssollwert auf eine autonome Art und Weise, d. h. ohne Einbeziehung einer zentralen DC-Netz-Master-Steuerung, basierend auf einer definierten Leistungsrampe mit definierter Steilheit modifiziert wird; wobei die Modifikation des Leistungssollwertes unter Verwendung vorheriger Leistungssollwerte und einer Zeitdauer der Modifikation, d. h. gemäß einer zuvor definierten Geschwindigkeit (in Megawatt pro Sekunde) und einem zeitlichen Abstand zu der Detektion, durchgeführt wird;
- einen Schritt (104) des Prüfens auf Beendigung des Modifikationsschritts (103), wenn die Überspannungsbedingung oder die Unterspannungsbedingung nicht mehr besteht.

**2.** Verfahren (100) nach Anspruch 1, wobei die Modifikation des DC-Leistungssollwertes durch einen konstanten und vordefinierten Parameter spezifiziert wird.

**Revendications**

**1.** Procédé (100) pour réguler une tension dans un système (1) de réseau HVDC, ou réseau continu à haute tension à bornes multiples, comportant au moins un poste (2) onduleur participant,
le procédé (100) comportant :

- une étape (101) de mesure d'une tension à courant continu locale au poste (20) onduleur participant ;
- une étape (102) de détection d'un état de surtension lorsque la tension à courant continu locale traverse une tension de seuil supérieure définie à l'avance ou une étape de détection d'un état de sous-tension lorsque la tension à courant continu locale traverse une tension de seuil inférieure définie à l'avance ;
- une étape (103) de déclenchement de modification d'une valeur réglée de puissance à courant continu disponible au poste (10) onduleur à la détection de l'état de surtension ou de l'état de sous-tension, dans lequel la valeur réglée de puissance à courant continu est modifiée de manière autonome, c'est-à-dire sans consulter un dispositif de commande maître de grille à courant continu central, sur la base d'une rampe de puissance définie de pente définie ; dans lequel la modification de la valeur de réglage de puissance est effectuée en utilisant des valeurs de réglage de puissance et des durées de modification précédentes, c'est-à-dire conformément à un taux de vitesse (en mégawatts par seconde) et à une distance temporelle jusqu'à la détection définis précédemment ;
- une étape (104) de vérification de la terminaison de l'étape (103) de modification lorsque la condition de surtension ou la condition de sous-tension ne persiste plus.

**2.** Procédé (100) suivant la revendication 1, dans lequel la modification de la valeur de réglage de puissance à courant continu est précisée par un paramètre constant et défini à l'avance.

FIG 1

FIG 2

FIG 3

FIG 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120092904 A1
- WO 2012000548 A1

- EP 2495864 A1